(19) Europäisches Patentamt
European Patent Office
Office européen des brevets

(11) EP 4 676 076 A1

(12) **EUROPEAN PATENT APPLICATION**
published in accordance with Art. 153(4) EPC

(43) Date of publication:
**07.01.2026 Bulletin 2026/02**

(21) Application number: 24927792.2

(22) Date of filing: **06.03.2024**

(51) International Patent Classification (IPC):
*H04N 23/81* (2023.01)

(52) Cooperative Patent Classification (CPC):
H04N 23/81

(86) International application number:
**PCT/CN2024/080405**

(87) International publication number:
**WO 2025/184845 (11.09.2025 Gazette 2025/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **VeriSilicon Microelectronics (Chengdu) Co., Ltd.**
**Chengdu, Sichuan 610041 (CN)**
• **VeriSilicon Microelectronics (Shanghai) Co., Ltd.**
**Shanghai 201203 (CN)**
• **VeriSilicon Microelectronics (Nanjing) Co., Ltd.**
**Nanjing, Jiangsu 211500 (CN)**
• **VeriSilicon Technology (Shanghai) Co., Ltd.**
**Shanghai 201306 (CN)**
• **Verisilicon Microelectronics (Hainan) Co., Ltd.**
**Haikou, Hainan 570208 (CN)**

(72) Inventors:
• **HUANG, Fang**
**Chengdu, Sichuan 610041 (CN)**
• **HE, Huali**
**Chengdu, Sichuan 610041 (CN)**
• **KONG, Xiaodong**
**Shanghai 201203 (CN)**
• **ZHOU, Lei**
**Shanghai 201203 (CN)**
• **YANG, Pingzhong**
**Shanghai 201203 (CN)**

(74) Representative: **Von Rohr Patentanwälte
Partnerschaft mbB
Rüttenscheider Straße 62
45130 Essen (DE)**

(54) **VIDEO DENOISING METHOD AND APPARATUS, AND ELECTRONIC DEVICE AND
COMPUTER-READABLE STORAGE MEDIUM**

(57) A video denoising method, a video denoising apparatus, an electronic device and a computer-readable storage medium are provided. The video denoising method includes: acquiring a number of target still frames of each pixel point in a current video frame, wherein the number of target still frames is a number of frames in a to-be-denoised video that remain continuous with a current video frame and are relatively still; constructing a fusion weight corresponding to each pixel point according to the number of target still frames; and fusing the current video frame and a previous video frame according to the fusion weight, to obtain a denoised video frame corresponding to the current video frame.

FIG. 1

**Description**

**Technical Field**

The present invention relates to the technical field of image processing, and specifically to a video denoising (noise reduction) method, a video denoising apparatus, an electronic device and a computer-readable storage medium.

**Background Art**

At present, surveillance cameras are in very wide application in both security surveillance and domestic life, users demand increasingly high quality in output images, and the users want to see clear and reliable images whether during the day or at night. However, the inevitable problem of noise exists due to process characteristics of image sensor *per se.* For example, thermal effects of electrons in the image sensor cause fluctuation of charge potential and thus form thermal noise. For instance, amplifier conversion characteristic inconsistency in the image sensor produces solid state noise. For another example, when a current flows through potential barrier (PN junction) in the image sensor, shot noise associated with incident photons and dark current will be generated. These noise phenomena are particularly obvious in conditions with poor lighting at night, and already severely affect sharpness of images. However, existing video denoising methods have poor denoising effects.

**Summary**

The present invention aims at providing a video denoising method, a video denoising apparatus, an electronic device and a computer-readable storage medium, which are capable of improving video denoising effects.

In the first aspect, embodiments of the present invention provide a video denoising method, including: acquiring a number of target still frames of each of one or more pixel points in a current video frame, wherein the number of target still frames is number of frames in a to-be-denoised video that remain continuous with the current video frame and are relatively still; constructing a fusion weight corresponding to each of the pixel points according to the number of target still frames; and fusing the current video frame and a previous video frame according to the fusion weight, so as to obtain a denoised video frame corresponding to the current video frame.

Compared with the prior art, in the video denoising method provided in the embodiments of the present invention, when denoising is performed on any video frame in the to-be-denoised video requiring denoising processing, this video frame is a current video frame, and when denoising is performed on this current video frame, the fusion weight of each pixel point is separately calculated according to number of continuous still frames of each pixel point therein, to determine the fusion weight of each pixel point, and when fusion denoising is performed on the current video frame, each pixel point is calculated according to corresponding fusion weight, so that the denoising effect of the denoised video frame obtained is better, thereby improving the video denoising effect of the to-be-denoised video.

In an optional embodiment, the video denoising method further includes: providing and initializing a still frame number recording matrix, wherein the still frame number recording matrix is used to record a number of historical still frames of each pixel point in the to-be-denoised video; the acquiring number of target still frames of each pixel point in a current video frame includes: acquiring, in the current video frame, a motion pixel point which has motion relative to the previous video frame and a still pixel point which is still relative to the previous video frame; setting the number of target still frames of the motion pixel point to be 1; and acquiring the number of historical still frames of the still pixel point from the still frame number recording matrix, and recording the number of target still frames of the still pixel point as the number of historical still frames plus 1. The still frame number recording matrix is provided to record the number of historical still frames of each pixel point in the to-be-denoised video. When determining the number of target still frames of each pixel point in the current video frame, motion comparison is directly performed between the current video frame and the previous video frame. For a still pixel point remaining still with respect to the previous video frame, the number of target still frames corresponding to the still pixel point may be obtained by directly adding 1 to the number of historical still frames corresponding to the still pixel point, so as to improve efficiency of acquiring the number of target still frames, and further improve overall denoising efficiency of the to-be-denoised video.

In an optional embodiment, after fusing the current video frame and a previous video frame according to the fusion weight to obtain a denoised video frame corresponding to the current video frame, the video denoising method further includes: setting the number of historical still frames as the number of target still frames. After the denoised video frame corresponding to the current video frame is obtained, that is, the denoising on the current video frame is ended, the number of historical still frames is set as the number of target still frames, which can facilitate acquiring numbers of target still frames corresponding to other subsequent video frames similarly by directly using the still frame number recording matrix, when performing denoising on the other subsequent video frames, thereby improving the denoising efficiency of the to-be-denoised video as a whole.

In an optional embodiment, the acquiring in the current video frame a motion pixel point which has motion relative to the previous video frame and a still pixel point which is still relative to the previous video frame includes: for any of the pixel points in the current video frame, acquiring a current motion detection region corresponding to the pixel point in the current video frame, and a previous motion detection region corresponding to the pixel point in the previous video frame; acquiring an absolute value of a difference between sum values of pixel values and a sum of absolute values of difference values between pixel values of individual pixel points in the current motion detection region and the previous motion detection region, respectively; and setting, as the motion pixel point, a pixel point whose absolute value of the difference between sum values of the pixel values is in a first preset threshold range and whose sum of absolute values of difference values between the pixel values is in a second preset threshold range, and setting, as the still pixel point, a pixel point whose absolute value of the difference between sum values of the pixel values is not in the first preset threshold range or whose sum of absolute values of difference values between the pixel values is not in the second preset threshold range. When performing motion detection on each pixel point, operation of a single pixel point is converted into operation of a plurality of pixel points in the motion detection region corresponding to this pixel point, which may improve the accuracy of motion detection for this pixel point, and correspondingly may improve the accuracy of the number of target still frames. The accuracy of the number of target still frames is improved, and the accuracy of fusion weight of each pixel point is also improved, so that the denoising effect on the current video frame is also further improved.

In an optional embodiment, the acquiring a current motion detection region corresponding to the pixel point in the current video frame and a previous motion detection region corresponding to the pixel point in the previous video frame includes: acquiring a region of the current video frame in a preset window as the current motion detection region, and acquiring a region of the previous video frame in the preset window as the previous motion detection region, with the pixel point as a central point of the preset window.

In an optional embodiment, prior to acquiring the region of the current video frame in the preset window as the current motion detection region, the video denoising method further includes: performing mirroring processing on the current video frame with vertexes and/or edges of the current video frame, so as to obtain a mirror frame; and the acquiring the region of the current video frame in the preset window as the current motion detection region includes: acquiring a region of the mirror frame in the preset window as the current motion detection region. Performing the mirroring processing on the video frame may improve accuracy of motion detection of the pixel points at edges and corners.

In an optional embodiment, the video denoising method further includes: setting a maximum number of fusible frames; and the constructing fusion weight corresponding to each of the pixel points according to the number of target still frames including: when the number of target still frames is greater than or equal to the maximum number of fusible frames, constructing the fusion weight according to the maximum number of fusible frames, and when the number of target still frames is less than the maximum number of fusible frames, constructing the fusion weight according to the number of target still frames. Video frames which are too far away from the current video frame have less influence on the denoising result of the current video frame, and by setting the maximum number of fusible frames, the fusion weight of each pixel point may be restricted, thereby reducing memory requirement while simplifying calculation.

In the second aspect, embodiments of the present invention provide a video denoising apparatus, including: a still frame number acquisition module, wherein the still frame number acquisition module is configured to acquire a number of target still frames of each pixel point in a current video frame, and the number of target still frames is number of frames in a to-be-denoised video that remain continuous with the current video frame and are relatively still; a weight constructing module, wherein the weight constructing module is configured to construct fusion weight corresponding to each of the pixel points according to the number of target still frames; and a denoising module, wherein the denoising module is configured to fuse the current video frame and a previous video frame according to the fusion weight, so as to obtain a denoised video frame corresponding to the current video frame.

In the third aspect, embodiments of the present invention provide an electronic device, including: at least one processor; and a memory communicating with the at least one processor, wherein the memory stores instructions that can be executed by the at least one processor, and the instructions are executed by the at least one processor, so that the at least one processor can execute the preceding video denoising method.

In the fourth aspect, embodiments of the present invention provide a computer-readable storage medium, storing computer programs, wherein the preceding video denoising method is implemented when the computer programs are executed by a processor.

Compared with the prior art, in the video denoising method, the video denoising apparatus, the electronic device and the computer-readable storage medium provided in the embodiments of the present invention, when denoising is performed on a video frame in a to-be-denoised video requiring denoising processing, this video frame is a current video frame, and when denoising is performed on this current video frame, fusion weight of each pixel point is separately calculated according to number of continuous still frames of each pixel point therein, so as to determine the fusion weight of each pixel point, and when fusion denoising is performed on the current video frame, each pixel point is calculated according to corresponding fusion weight, so that the denoising effect of the denoised video frame obtained is better, thereby improving the video denoising effect of the to-be-denoised video.

**Brief Description of Drawings**

In order to more clearly illustrate technical solutions of embodiments of the present invention, drawings which need to be used in the embodiments will be briefly introduced below. It should be understood that the drawings below merely show some embodiments of the present invention, and thus should not be considered as limitation to the scope. Those ordinarily skilled in the art still could obtain other relevant drawings according to these drawings, without using any creative efforts.

FIG. 1 is a schematic flowchart of a video denoising method provided in Embodiment 1 of the present invention;

FIG. 2 is a schematic flowchart of judging whether a pixel point is in a still state relative to a previous video frame in the video denoising method provided in Embodiment 1 of the present invention;

FIG. 3 is a schematic view of a current video frame and a mirror frame in the video denoising method provided in Embodiment 1 of the present invention;

FIG. 4 is a structural schematic view of a video denoising apparatus provided in Embodiment 2 of the present invention; and

FIG. 5 is a structural schematic view of an electronic device provided in Embodiment 3 of the present invention.

**Detailed Description of Embodiments**

In order to make objectives, technical solutions and advantages of the embodiments of the present invention clearer, the technical solutions in the embodiments of the present invention will be described below in conjunction with drawings in the embodiments of the present invention. Apparently, the embodiments described are some but not all embodiments of the present invention. Generally, components in the embodiments of the present invention, as described and shown in the drawings herein, may be arranged and designed in various different configurations.

Therefore, the following detailed description of the embodiments of the present invention provided in the drawings is not intended to limit the scope of the present invention claimed, but merely illustrates chosen embodiments of the present invention.

It should be noted that similar reference signs and letters represent similar items in the following drawings. Therefore, once a certain item is defined in one drawing, it is not needed to be further defined or explained in subsequent drawings.

It should be noted that the features in the embodiments of the present invention may be combined with each other without conflict.

In application scenarios of mobile phone, video surveillance and the like, a crucial step for improving image quality is fusing shot images by temporal domain fusion, so as to denoise shot pictures and videos. Taking such application scenario of video surveillance as an example, a current mainstream temporal domain denoising algorithm mainly includes the following steps:

S1: determining a maximum number N of fusible frames of temporal domain denoising;

S2: calculating, based on the maximum number N of fusible frames, fusion weight $FusionWeight = \frac{1}{N}$ of each frame during fusion in a temporal domain denoising process;

S3: when performing denoising on an i-th frame of image, firstly calculating frame difference information $Diff = f(Ref_{i-1}, Cur_i)$ between $Ref_{i-1}$ and $Cur_i$, where $Cur_i$ represents the i-th frame of image of a shot video sequence, and $Ref_{i-1}$ represents an (i-1)-th frame of image;

S4: then acquiring a motion pixel point and a still pixel point according to a preset motion detection threshold *th*.

$$MotionMask(x,y) = \begin{cases} 1 & Diff(x,y) \geq th \\ 0 & Diff(x,y) < th \end{cases};$$

In the above, (*x, y*) represents coordinates of pixel point, *MotionMask*(*x, y*) = 1 indicates that this pixel point relatively moves in $Ref_{i-1}$ and $Cur_i$, and is a motion pixel point, and *MotionMask*(*x, y*) = 0 indicates that this pixel point is relatively still in $Ref_{i-1}$ and $Cur_i$, and is a still pixel point.

S5: fusing $Ref_{i-1}$ and $Cur_i$ according to *MotionMask,* and recording a fusion result as $Ref_i$;

$$Ref_i = Cur_i * MotionMask + \left[ Cur_i * \frac{1}{N} + Ref_{i-1} * \left( 1 - \frac{1}{N} \right) \right] * (1 - MotionMask) \quad .$$

Assuming that noise intensity of $Cur_i$ is σ, $Cur_i$ has motion relative to $Ref_{i-1}$ (for simplicity, assuming that each pixel point in $Cur_i$ moves relative to $Ref_{i-1}$), and assuming that noise intensity of $Ref_{i-1}$ approximates 0, the noise intensity of $Ref_i$ after fusion is σ, and when fusion between $Cur_{i+1}$ and $Ref_i$ is performed, if the fusion is still performed according to the fusion weight of $\frac{1}{N}$, noise intensity of new fusion result $Ref_{i+1}$ is $\frac{N-1}{N} \sigma$, and the temporal domain denoising converges at a rate of $\frac{1}{N}$, thus denoising effect is poor.

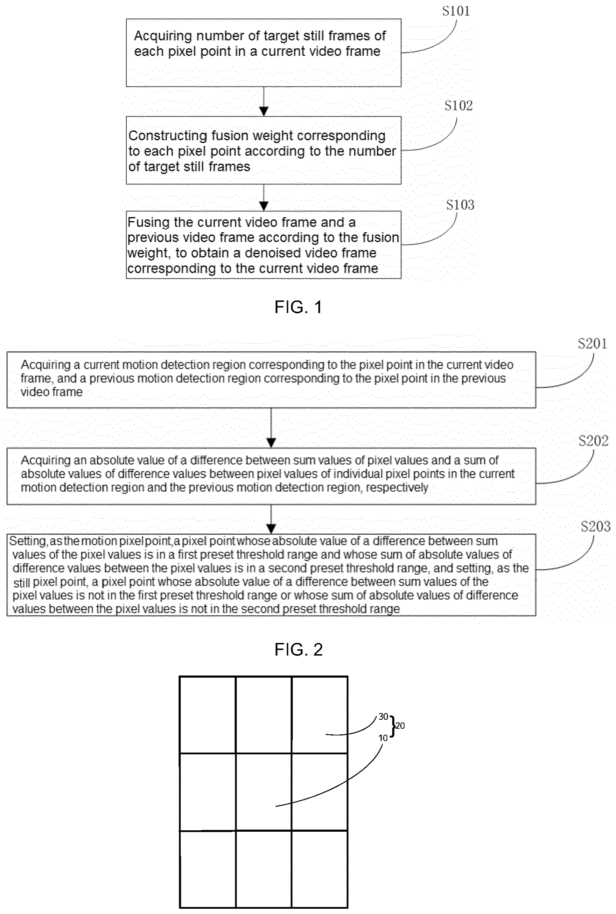

In order to improve the denoising effect of the temporal domain fusion denoising, Embodiment 1 of the present invention provides a video denoising method, as shown in FIG. 1, including:

Step S101: acquiring number of target still frames of each pixel point in a current video frame.

In this step, the number of target still frames is a number of frames in a to-be-denoised video that remain continuous with the current video frame and are relatively still. For example, if the current video frame is an n-th video frame, for any pixel point in the current video frame, if this pixel point has no motion relative to an (n-1)-th video frame, that is, is relatively still, and this pixel point in an (n-2)-th video frame has motion relative to the (n-1)-th video frame, then this pixel point in the n-th video frame is only still relative to the (n-1)-th video frame, and the number of target still frames corresponding to this pixel point is 1. If this pixel point has no motion relative to both the (n-1)-th video frame and the (n-2)-th video frame, that is, is relatively still, and this pixel point in an (n-3)-th video frame has motion relative to the (n-2)-th video frame, this pixel point is still relative to two video frames in total, namely, the (n-1)-th video frame and the (n-2)-th video frame, the number of target still frames corresponding to this pixel point is 2. By parity of reasoning, the number of target still frames corresponding to each pixel point is obtained.

In some embodiments of the present invention, with reference to FIG. 2, for any pixel point in the current video frame, judging whether this pixel point is in a still state relative to a previous video frame specifically may include:

Step S201: acquiring a current motion detection region corresponding to the pixel point in the current video frame, and a previous motion detection region corresponding to the pixel point in the previous video frame.

In different embodiments of the present invention, the previous video frame may be an original video frame image located one frame before the current video frame in the to-be-detected video, an original video frame image located n frames before the current video frame in the to-be-detected video, or an image obtained after denoising the original video frame image located one frame before the current video frame in the to-be-detected video, which specifically may be flexibly set according to actual needs.

In this step, the current motion detection region and the previous motion detection region may be acquired by the same method, which, for example, specifically may be as follows: acquiring, with the pixel point as a central point of a preset window, a region of the current video frame in the preset window as the current motion detection region, and acquiring a region of the previous video frame in the preset window as the previous motion detection region. In the above, the preset window may be, for example, a circular window with a radius of r, a square window with a side length of A, or a rectangular window with a length of l and a width of w, and the like, which specifically may be flexibly selected according to actual needs. In the above, the preset window may be sized specifically according to a size of the to-be-denoised video, requirement of denoising accuracy, etc.

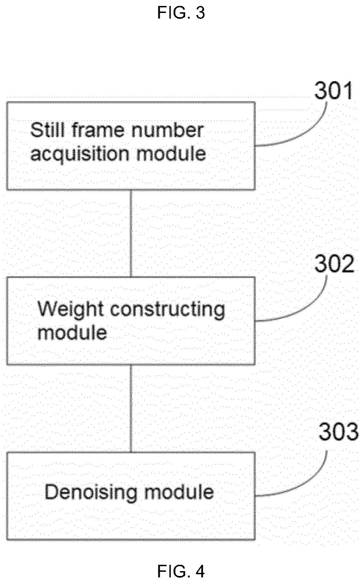

Further, in some embodiments of the present invention, as shown in FIG. 3, for current video frame 10, mirroring processing is performed on the current video frame with vertexes and/or edges of the current video frame 10, so as to obtain a mirror frame 20, wherein the mirror frame 20 includes the current video frame 10 and a mirror image 30 obtained by mirroring the current video frame 10. In the above, the mirror image 30 is a mirror result of the mirroring processing performed on the video frame 10. As shown in FIG. 3, taking the video frame 10 being in a rectangular shape as an example, the video frame 10 in a rectangular shape includes four edges and four vertexes, and the mirroring processing is performed on the video frame 10 with the four edges and four vertexes respectively, so as to obtain eight mirror images 30 in total, and the eight mirror images 30 and the original video frame 10 together form the mirror frame 20. The current motion detection region is acquired on the basis of the mirror frame 20, that is, a region of the mirror frame in the preset window is acquired as the current motion detection region. Mirroring processing is performed on the video frame to obtain the mirror frame 20, and the region of the mirror frame 20 in the preset window is acquired as the current motion detection region, which may avoid a situation that the preset window may exceed the current video frame 10 when the preset window extracts the current motion detection region corresponding to pixel points at edges and corners of the current video frame 10, thus improving accuracy of motion detection of the pixel points at edges and corners.

Step S202: acquiring an absolute value of a difference between sum values of pixel values and a sum of absolute values of difference values between pixel values of individual pixel points in the current motion detection region and the previous motion detection region, respectively.

In this step, the acquiring the absolute value of the difference between the sum values of pixel values of individual pixel points in the current motion detection region and the previous motion detection region specifically includes: first acquiring a sum value of current pixel values of all pixel points in the current motion detection region, and a sum value of previous pixel values of all pixel points in the previous motion detection region, and then obtaining the absolute value of the difference value between the sum value of the current pixel values and the sum value of the previous pixel values. The acquiring the sum of absolute values of difference values between pixel values of individual pixel points in the current motion detection region and the previous motion detection region specifically includes: obtaining an absolute value of a difference value between pixel values of the same pixel point in the current motion detection region and the previous motion detection region, and then summing absolute values of the difference values corresponding to all the pixel points.

Taking as an example that the current motion detection region and the previous motion detection region are square regions with a side length of 2r and coordinates of a pixel point corresponding to the current motion detection region and the previous motion detection region are (x, y), the absolute value of the difference between the sum values of pixel values and the sum of absolute values of difference values between pixel values of individual pixel points in the current motion detection region and the previous motion detection region may be respectively calculated according to the following equation:

$$MeanDiff(x,y) = |\sum_{k1=-r}^{r}\sum_{k2=-r}^{r} Cur_i(x+k1, y+k2) - \sum_{k1=-r}^{r}\sum_{k2=-r}^{r} Ref_{i-1}(x+k1, y+k2)|$$

and the equation:

$$SAD(x,y) = \sum_{k1=-r}^{r}\sum_{k2=-r}^{r}|Cur_i(x+k1, y+k2) - Ref_{i-1}(x+k1, y+k2)|.$$

In the above, *MeanDiff(x, y)* is the absolute value of the difference between the sum values of pixel values of individual pixel points in the current motion detection region and the previous motion detection region, corresponding to the pixel point (x, y), *SAD(x, y)* is the sum of absolute values of difference values between pixel values of individual pixel points in the current motion detection region and the previous motion detection region, corresponding to the pixel point (x, y), and $Cur_i$ is the current video frame, and $Ref_{i-1}$ is the previous video frame.

Step S203: setting, as the motion pixel point, a pixel point whose absolute value of a difference between sum values of the pixel values is in a first preset threshold range and whose sum of absolute values of difference values between the pixel values is in a second preset threshold range, and setting, as the still pixel point, a pixel point whose absolute value of a difference between sum values of the pixel values is not in the first preset threshold range or whose sum of absolute values of difference values between the pixel values is not in the second preset threshold range.

In this step, the first preset threshold range and the second preset threshold range may be set in advance according to actual denoising needs. For example, thresholds *th*1 and *th*2 may be set in advance, and a range of greater than the threshold *th*1 is taken as the first preset threshold range, and a range of greater than the threshold *th*2 is taken as the second preset threshold range. Equation is expressed as follows:

$$MotionMask(x,y) = \begin{cases} 1 & MeanDiff(x,y) > th1 \text{ and } SAD(x,y) > th2 \\ 0 & otherwise \end{cases};$$

*MotionMask(x, y)* = 1, that is, this pixel point has motion relative to the previous video frame, and is a motion pixel point;

*MotionMask(x, y)* = 0, that is, this pixel point is still relative to the previous video frame, and is a still pixel point.

It may be understood that the preceding description of taking the range of greater than the threshold *th*1 as the first preset threshold range and taking the range of greater than the threshold *th*2 as the second preset threshold range is merely an example in some embodiments of the present invention, while in some other embodiments of the present invention, for example, it is also possible to take a range of less than the threshold *th*1 as the first preset threshold range and take a range of less than the threshold *th*2 as the second preset threshold range, or take a range of greater than the threshold *th*1 as the first preset threshold range and take a range of less than the threshold *th*2 as the second preset threshold range, etc., which specifically may be set as actually needed.

In the method as shown in FIG. 2, when performing motion detection on each pixel point, operation of a single pixel point is converted into operation of a plurality of pixel points in the motion detection region corresponding to this pixel point, which may improve the accuracy of motion detection for this pixel point, and correspondingly may improve the accuracy of the number of target still frames. The accuracy of the number of target still frames is improved, and the accuracy of fusion weight of each pixel point is also improved, so that the denoising effect on the current video frame is also further improved.

In some embodiments of the present invention, the number of target still frames of each pixel point may be acquired frame by frame according to the steps shown in FIG. 2.

Further, in some other embodiments of the present invention, a still frame number recording matrix further may be provided. The still frame number recording matrix includes elements of the same number as the number of pixel points in the to-be-denoised video, wherein each element is used for recording number of historical still frames of each pixel point in the to-be-denoised video, and each element therein is initialized to be 1 when providing the still frame number recording matrix. After the still frame number recording matrix is provided, the acquiring the number of target still frames of each pixel point in the current video frame may be as follows: acquiring, in the current video frame, a motion pixel point which has motion relative to a previous video frame and a still pixel point which is still relative to the previous video frame, according to the steps shown in FIG. 2; setting the number of target still frames of the motion pixel point to be 1; and acquiring the number of historical still frames of the still pixel point from the still frame number recording matrix, and recording the number of target still frames of the still pixel point as the number of historical still frames plus 1. The equation is expressed as follows:

$$FusionMask(x,y) = \begin{cases} FusionMask'\ (x,y) + 1 & MotionMask(x,y) = 0 \\ 1 & MotionMask(x,y) = 1 \end{cases}$$

In the above, *FusionMask*(*x, y*) is the number of target still frames corresponding to the pixel point (*x, y*), and *FusionMask'*(*x, y*) is the number of historical still frames corresponding to the pixel point (*x, y*).

The still frame number recording matrix is provided to record the number of historical still frames of each pixel point in the to-be-denoised video. When the number of target still frames of each pixel point in the current video frame is determined, motion comparison is directly performed between the current video frame and the previous video frame. For a still pixel point remaining still with respect to the previous video frame, the number of target still frames corresponding to the still pixel point may be obtained by directly adding 1 to the number of historical still frames corresponding to the still pixel point, so as to improve efficiency of acquiring the number of target still frames, and further improve overall denoising efficiency of the to-be-denoised video.

In addition, after denoising on the current video frame is completed, it is also possible to set the number of historical still frames corresponding to each element in the still frame number recording matrix as the number of target still frames of each pixel point in the current video frame. It can facilitate acquiring numbers of target still frames corresponding to other subsequent video frames similarly by directly using the still frame number recording matrix when performing denoising on other subsequent video frames, thereby improving the denoising efficiency of the to-be-denoised video as a whole.

Step S102: constructing the fusion weight corresponding to each pixel point according to the number of target still frames.

In this step, the fusion weight corresponding to each pixel point may be a reciprocal of the number of target still frames. Equation is expressed as follows:

$$FusionWeight(x,y) = \frac{1}{FusionMask(x,y)}.$$

Step S103: fusing the current video frame and the previous video frame according to the fusion weight, so as to obtain a denoised video frame corresponding to the current video frame.

In this step, according to a fusion denoising equation:

$$Ref_i(x,y) = Cur_i * FusionWeight(x,y) + Ref_{i-1} * (1 - Fusion\_weight(x,y))$$

the current video frame and the previous video frame are fused, so as to obtain the denoised video frame corresponding to the current video frame.

It is assumed that the noise intensity of the current video frame $Cur_i$ is $\sigma$, the current video frame $Cur_i$ has motion relative to the previous video frame $Ref_{i-1}$ (for simplicity, assuming that each pixel point in $Cur_i$ has motion relative to $Ref_{i-1}$). Assuming that the noise intensity of $Ref_{i-1}$ approximates 0, the noise intensity of $Ref_i$ after fusion is $\sigma$, when fusion is performed between the next video frame $Cur_{i+1}$ and the fusion result $Ref_i$ of the current video frame, the noise intensity of new fusion result $Ref_{i+1}$ is $\frac{\sigma}{2}$, much smaller than $\frac{N-1}{N}\sigma$ of existing solution.

Compared with the prior art, in the video denoising method provided in Embodiment 1 of the present invention, when denoising is performed on a video frame in a to-be-denoised video requiring denoising processing, this video frame is a current video frame, and when denoising is performed on this current video frame, fusion weight of each pixel point is separately calculated according to number of continuous still frames of each pixel point therein, so as to determine the fusion weight of each pixel point, and when fusion denoising is performed on the current video frame, each pixel point is calculated according to corresponding fusion weight, so that the denoising effect of the denoised video frame obtained is better, thereby improving the video denoising effect of the to-be-denoised video.

Further, in some other embodiments of the present invention, a maximum number $N$ of fusible frames also may be set, wherein the maximum number $N$ of fusible frames may be set according to actual denoising needs. For example, if current scenario is dark and has relatively high noise, a relatively large value may be taken for the maximum number $N$ of fusible frames. In some embodiments of the present invention, the maximum number $N$ of fusible frames may be set to be $\leq$ 255, and the maximum number $N \leq 255$ of fusible frames may be set to be stored using an 8-Bit storage unit. The constructing fusion weight corresponding to each pixel point according to the number of target still frames correspondingly may be as follows: when the number of target still frames is greater than or equal to the maximum number of fusible frames, constructing the fusion weight according to the maximum number of fusible frames, and when the number of target still frames is less than the maximum number of fusible frames, constructing the fusion weight according to the number of target still frames. The equation is expressed as follows:

$$FusionMask(x, y) = \begin{cases} \min\left(N, FusionMask'(x, y) + 1\right) & MotionMask(x, y) = 0 \\ 1 & MotionMask(x, y) = 1 \end{cases}$$

Video frames which are too far away from the current video frame have less influence on the denoising result of the current video frame, and by setting the maximum number of fusible frames, the fusion weight of each pixel point may be restricted, thereby reducing memory requirement while simplifying calculation.

Embodiment 2 of the present invention provides a video denoising apparatus, as shown in FIG. 4, including: a still frame number acquisition module 301, wherein the still frame number acquisition module 301 is configured to acquire number of target still frames of each pixel point in a current video frame, and the number of target still frames is number of frames in a to-be-denoised video that remain continuous with the current video frame and are relatively still; a weight constructing module 302, wherein the weight constructing module 302 is configured to construct fusion weight corresponding to each pixel point according to the number of target still frames; and a denoising module 303, wherein the denoising module 303 is configured to fuse the current video frame and a previous video frame according to the fusion weight, so as to obtain a denoised video frame corresponding to the current video frame.

Compared with the prior art, in the video denoising apparatus provided in the embodiment of the present invention, when denoising is performed on a video frame in a to-be-denoised video requiring denoising processing, this video frame is a current video frame, and when denoising is performed on this current video frame, the still frame number acquisition module 301 acquires the number of target still frames of each pixel point in the current video frame, the weight constructing module 302 constructs the fusion weight corresponding to each pixel point according to the number of target still frames, and when the denoising module 303 performs fusion denoising, each pixel point is calculated according to corresponding fusion weight, so that denoising effect of a denoised video frame obtained is better, thus improving the video denoising effect of the to-be-denoised video.

In some embodiments of the present invention, the still frame number acquisition module 301 is further configured to provide and initialize a still frame number recording matrix, wherein the still frame number recording matrix is used to record number of historical still frames of each pixel point in the to-be-denoised video. The weight constructing module 302 is further configured to acquire, in the current video frame, a motion pixel point which has motion relative to a previous video frame and a still pixel point which is still relative to the previous video frame; set the number of target still frames of the motion pixel point to be 1; and acquire number of historical still frames of the still pixel point from the still frame number recording matrix, and record the number of target still frames of the motion pixel point as the number of historical still frames plus 1.

In some embodiments of the present invention, the still frame number acquisition module 301 is further configured to set the number of historical still frames as the number of target still frames.

In some embodiments of the present invention, the weight constructing module 302 is further configured to acquire an absolute value of a difference between sum values of pixel values and a sum of absolute values of difference values between pixel values of individual pixel points in a current motion detection region and a previous motion detection region, respectively; set, as a motion pixel point, a pixel point whose absolute value of a difference between sum values of pixel values is in a first preset threshold range and whose sum of absolute values of difference values between pixel values is in a second preset threshold range, and set, as a still pixel point, a pixel point whose absolute value of difference between sum values of pixel values is not in the first preset threshold range or whose sum of absolute values of difference values between pixel values is not in the second preset threshold range.

In some embodiments of the present invention, the still frame number acquisition module 301 is further configured to acquire a region of the current video frame in a preset window as the current motion detection region, and acquire a region of the previous video frame in the preset window as the previous motion detection region, with the pixel point taken as a central point of the preset window.

In some embodiments of the present invention, the still frame number acquisition module 301 is further configured to perform mirroring processing on the current video frame with vertexes and/or edges of the current video frame, so as to obtain a mirror frame, and acquire a region of the mirror frame in the preset window as the current motion detection region.

In some embodiments of the present invention, the weight constructing module 302 is further configured to set a maximum number of fusible frames; and construct a fusion weight corresponding to each pixel point according to the number of target still frames, including: when the number of target still frames is greater than or equal to the maximum number of fusible frames, constructing the fusion weight according to the maximum number of fusible frames, and when the number of target still frames is less than the maximum number of fusible frames, constructing the fusion weight according to the number of target still frames.

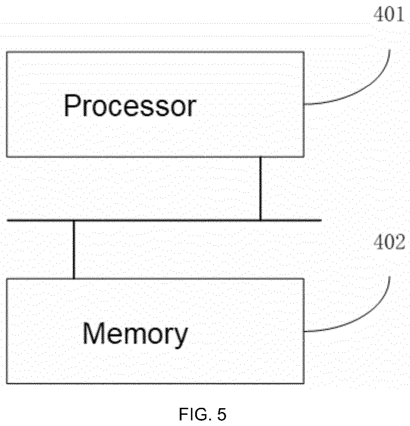

Embodiment 3 of the present invention relates to an electronic device, as shown in FIG. 5, including: at least one processor 401; and a memory 402 communicating with the at least one processor, wherein the memory 402 stores instructions that can be executed by the at least one processor, and the instructions are executed by the at least one processor 401, so that the at least one processor 401 can execute the methods in the above embodiments.

In the above, the memory and the processor are connected by a bus, the bus may include any number of interconnected buses and bridges, and the buses connect various circuits of one or more processors and memories. The bus further may connect a variety of other circuits such as peripheral devices, voltage regulators and power management circuits, all of which are well known in the art and therefore are not further described herein. Bus interface provides interface between the bus and transceiver. The transceiver may be one element or multiple elements, such as multiple receivers and transmitters, providing units for communicating with various other devices over a transmission medium. Data processed by the processor is transmitted on a wireless medium through an antenna, and further, the antenna also receives data and transmits the data to the processor.

The processor is responsible for managing the bus and general processing, and further may provide various functions, including timing, peripheral interfacing, voltage regulation, power management and other control functions. The memory may be used to store data used by the processor in performing operations.

Embodiment 4 of the present invention relates to a computer-readable storage medium stored with computer programs. The above method embodiments are implemented when the computer programs are executed by a processor.

That is, those skilled in the art could understand that steps of the method in the above embodiments might be partially or completely implemented by relevant hardware instructed by a program, which program is stored in a storage medium, and includes several instructions for enabling a device (which may be a single chip microcomputer, a chip or the like) or a processor to perform all or part of the steps of the methods of various embodiments of the present invention. The preceding storage medium includes various media in which program codes can be stored, such as USB flash disk, mobile hard disk, read-only memory (ROM), random access memory (RAM), diskette or compact disk.

The above-mentioned are merely for specific embodiments of the present invention, but the scope of protection of the present invention is not limited thereto. Any change or substitution that may be easily conceived by those skilled in the present technical field within the technical scope disclosed in the present invention should fall within the scope of protection of the present invention. Therefore, the scope of protection of the present invention should be determined by the scope of protection of the claims.

**Claims**

1. A video denoising method, comprising:

acquiring a number of target still frames of each of one or more pixel points in a current video frame, wherein the number of target still frames is a number of frames in a to-be-denoised video that remain continuous with the current video frame and are relatively still;
constructing a fusion weight corresponding to each pixel point of the pixel points according to the number of target still frames; and
fusing the current video frame and a previous video frame according to the fusion weight, to obtain a denoised video frame corresponding to the current video frame.

2. The video denoising method according to claim 1, wherein the video denoising method further comprises:
providing and initializing a still frame number recording matrix, wherein the still frame number recording matrix is used to record a number of historical still frames of each pixel point of the pixel points in the to-be-denoised video;
wherein acquiring the number of the target still frames of each pixel point of the pixel points in the current video frame comprises:

acquiring, in the current video frame, a motion pixel point which has motion relative to the previous video frame and a still pixel point which is still relative to the previous video frame;
setting a number of target still frames of the motion pixel point to be 1; and
acquiring a number of historical still frames of the still pixel point from the still frame number recording matrix, and recording a number of target still frames of the still pixel point as the number of historical still frames of the still pixel point plus 1.

3. The video denoising method according to claim 2, wherein after fusing the current video frame and the previous video frame according to the fusion weight to obtain the denoised video frame corresponding to the current video frame, the video denoising method further comprises:
setting the number of the historical still frames as the number of the target still frames.

4. The video denoising method according to claim 2, wherein acquiring in the current video frame the motion pixel point which has motion relative to the previous video frame and the still pixel point which is still relative to the previous video frame comprises:

for any pixel point of the pixel points in the current video frame, acquiring a current motion detection region corresponding to the pixel point in the current video frame, and a previous motion detection region corresponding to the pixel point in the previous video frame;
acquiring an absolute value of a difference between sum values of pixel values and a sum of absolute values of difference values between pixel values of individual pixel points in the current motion detection region and the previous motion detection region, respectively; and
setting, as the motion pixel point, a pixel point whose absolute value of a difference between sum values of the pixel values is in a first preset threshold range and whose sum of absolute values of difference values between the pixel values is in a second preset threshold range, and setting, as the still pixel point, a pixel point whose absolute value of a difference between sum values of the pixel values is not in the first preset threshold range or whose sum of absolute values of difference values between the pixel values is not in the second preset threshold range.

5. The video denoising method according to claim 4, wherein acquiring the current motion detection region corresponding to the pixel point in the current video frame and the previous motion detection region corresponding to the pixel point in the previous video frame comprises:
acquiring, with the pixel point as a central point of a preset window, a region of the current video frame in the preset window as the current motion detection region, and acquiring a region of the previous video frame in the preset window as the previous motion detection region.

6. The video denoising method according to claim 5, wherein before acquiring the region of the current video frame in the preset window as the current motion detection region, the video denoising method further comprises:
performing mirroring processing on the current video frame with vertexes and/or edges of the current video frame, to obtain a mirror frame; and
wherein acquiring the region of the current video frame in the preset window as the current motion detection region comprises:

acquiring a region of the mirror frame in the preset window as the current motion detection region.

7. The video denoising method according to any one of claims 1 to 6, wherein the video denoising method further comprises:

setting a maximum number of fusible frames; and
wherein constructing the fusion weight corresponding to the each pixel point according to the number of target still frames comprises:
constructing the fusion weight according to the maximum number of fusible frames when the number of target still frames is greater than or equal to the maximum number of fusible frames, and constructing the fusion weight according to the number of target still frames when the number of target still frames is less than the maximum number of fusible frames.

8. A video denoising apparatus, comprising:

a still frame number acquisition module, wherein the still frame number acquisition module is configured to acquire a number of target still frames of each of one or more pixel points in a current video frame, and the number of target still frames is number of frames in a to-be-denoised video that remain continuous with the current video frame and are relatively still;
a weight constructing module, wherein the weight constructing module is configured to construct a fusion weight corresponding to each pixel point of the pixel points according to the number of target still frames; and
a denoising module, wherein the denoising module is configured to fuse the current video frame and a previous video frame according to the fusion weight, so as to obtain a denoised video frame corresponding to the current video frame.

9. An electronic device, comprising:
at least one processor; and a memory communicating with the at least one processor,
wherein the memory stores instructions executable by the at least one processor, and the instructions are executed by the at least one processor, so that the at least one processor can execute the video denoising method according to any one of claims 1 to 7.

10. A computer-readable storage medium, storing computer programs, wherein the video denoising method according to any one of claims 1 to 7 is implemented when the computer programs are executed by a processor.

S101

Acquiring number of target still frames of each pixel point in a current video frame

S102

Constructing fusion weight corresponding to each pixel point according to the number of target still frames

S103

Fusing the current video frame and a previous video frame according to the fusion weight, to obtain a denoised video frame corresponding to the current video frame

FIG. 1

S201

Acquiring a current motion detection region corresponding to the pixel point in the current video frame, and a previous motion detection region corresponding to the pixel point in the previous video frame

S202

Acquiring an absolute value of a difference between sum values of pixel values and a sum of absolute values of difference values between pixel values of individual pixel points in the current motion detection region and the previous motion detection region, respectively

S203

Setting, as the motion pixel point, a pixel point whose absolute value of a difference between sum values of the pixel values is in a first preset threshold range and whose sum of absolute values of difference values between the pixel values is in a second preset threshold range, and setting, as the still pixel point, a pixel point whose absolute value of a difference between sum values of the pixel values is not in the first preset threshold range or whose sum of absolute values of difference values between the pixel values is not in the second preset threshold range

FIG. 2

30
20
10

FIG. 3

```
   ┌─────────────────────────┐   ┐ 301
   │   Still frame number    │
   │   acquisition module    │
   └─────────────────────────┘
                │
                │
   ┌─────────────────────────┐   ┐ 302
   │   Weight constructing   │
   │   module                │
   └─────────────────────────┘
                │
                │
   ┌─────────────────────────┐   ┐ 303
   │   Denoising module      │
   │                         │
   └─────────────────────────┘
```

FIG. 4

401

Processor

402

Memory

FIG. 5

## INTERNATIONAL SEARCH REPORT

| International application No. |
| --- |
| **PCT/CN2024/080405** |

### A.    CLASSIFICATION OF SUBJECT MATTER

H04N 23/81(2023.01)i

According to International Patent Classification (IPC) or to both national classification and IPC

### B.    FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS: CNTXT; VEN; EPTXT; USTXT; WOTXT; JPTXT; CNKI; IEEE: 视频, 影像, 图像, 去噪, 降噪, 降低, 减少, 噪音, 静止, 帧, 数量, 总数, 权重, 权值, 加权, 融合, 加, video, image, noise, reduce, decrease, frame, static, quiet, quantity, amount, count, weight

### C.    DOCUMENTS CONSIDERED TO BE RELEVANT

| Category* | Citation of document, with indication, where appropriate, of the relevant passages | Relevant to claim No. |
| --- | --- | --- |
| X | US 5404178 A (SONY CORP.) 04 April 1995 (1995-04-04)<br>description, column 4, line 4 to column 8, line 50, and figures 1-13 | 1-10 |
| A | CN 114679553 A (HUAWEI TECHNOLOGIES CO., LTD.) 28 June 2022 (2022-06-28)<br>entire document | 1-10 |
| A | CN 115619653 A (WUHAN TCL GROUP INDUSTRIAL RESEARCH INSTITUTE CO., LTD.) 17 January 2023 (2023-01-17)<br>entire document | 1-10 |
| A | US 6100937 A (CONEXANT SYSTEMS, INC.) 08 August 2000 (2000-08-08)<br>entire document | 1-10 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 November 2024** | **05 November 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/080405**

| Patent document cited in search report | | | Publication date (day/month/year) | Patent family member(s) | | | Publication date (day/month/year) |
|---|---|---|---|---|---|---|---|
| US | 5404178 | A | 04 April 1995 | JPH | 06121192 | A | 28 April 1994 |
| | | | | DE | 69328602 | D1 | 15 June 2000 |
| | | | | DE | 69328602 | T2 | 04 January 2001 |
| | | | | KR | 940010805 | A | 26 May 1994 |
| | | | | KR | 100295562 | B1 | 17 September 2001 |
| | | | | EP | 0592196 | A2 | 13 April 1994 |
| | | | | EP | 0592196 | A3 | 16 August 1995 |
| | | | | EP | 0592196 | B1 | 10 May 2000 |
| CN | 114679553 | A | 28 June 2022 | None | | | |
| CN | 115619653 | A | 17 January 2023 | None | | | |
| US | 6100937 | A | 08 August 2000 | WO | 9962249 | A1 | 02 December 1999 |
| | | | | EP | 1092316 | A1 | 18 April 2001 |
| | | | | EP | 1092316 | A4 | 15 March 2006 |

Form PCT/ISA/210 (patent family annex) (July 2022)